(19) **Europäisches Patentamt**

**European Patent Office**

**Office européen des brevets**

(11) Publication number: **0 214 942**
**B1**

(12) **EUROPEAN PATENT SPECIFICATION**

(45) Date of publication of the patent specification:
03.10.90

(21) Application number: **86850269.1**

(22) Date of filing: **29.07.86**

(51) Int. Cl.⁵: **B01J 29/08**, B01D 53/36

(54) **Catalyst and method for purifying exhaust gases from nitrogen oxides.**

(30) Priority: **29.07.85 SE 8503632**
**29.07.85 SE 8503633**

(43) Date of publication of application:
**18.03.87 Bulletin 87/12**

(45) Publication of the grant of the patent:
**03.10.90 Bulletin 90/40**

(84) Designated Contracting States:
**BE DE GB NL SE**

(56) References cited:
**DE-A- 2 555 189**
**GB-A- 1 393 053**
**GB-A- 1 393 501**
**US-A- 4 456 693**

(73) Proprietor: **Eka Nobel Aktiebolag, S-445 01 Surte(SE)**

(72) Inventor: **Järas, Sven Gunnar, Korngangen 9,**
**S-442 39 Kungälv(SE)**
Inventor: **Johansson, Kerstin Elisabet, Askims**
**Stationsväg 33, S-436 00 Askim(SE)**
Inventor: **Livrell, Nils Jonny, Rastensgatan 35 B,**
**S-416 54 Göteborg(SE)**
Inventor: **Tapper, Hans Kenny, Munkebäcksgatan 12 A,**
**S-416 53 Göteborg(SE)**

(74) Representative: **Schöld, Zaid, Nobel Industries Sweden**
**AB Patent Department Box 11554,**
**S-100 61 Stockholm(SE)**

ACTORUM AG

## Description

Nitrogen oxides are formed, inter alia, during combustion of fossil fuels due to oxidation of the molecular nitrogen in the combustion air, and also due to oxidation of nitrogen chemically bonded in the fuel. Nitrogen oxides also occur in flue or exhaust gases from nitric acid production plants. Various catalysts and methods for removing such nitrogen oxides from flue gases have previously been suggested. As an example, mention may be made of U.S. patent specification 4,157,375 which discloses a catalyst material based upon a combination of zeolite and transition metal, provided on a support in the form of, for example, a honeycomb structure. U.S. patent specification 4,046,888 discloses another method for removing nitrogen oxides, use being made of a catalyst based upon zeolite and copper, in which method ammonia is admixed to the gas inflow. Also British patent specification 1,393,053 describes a method of purifying, by means of a zeolite material ion-exchanged with silver, waste gases in the presence of ammonia.

German Offenlegungsschrift DE-A-2,555,189 discloses a method of producing a vanadium catalyst intended for the selective reduction of nitrogen oxides and carried by a support, such as alumina.

It has now been discovered that a very efficient purification of flue gases may be obtained if use is made, for the purification, of a catalyst comprising a support and a catalytically active material, said catalytically active material comprising an ultrastable zeolite Y ion-exchanged with rare earth metals and/or combined with vanadium pentoxide.

In connection with the cracking of hydrocarbons, especially petroleum hydrocarbons, it is previously known in and per se to utilise catalysts based upon ultrastable zeolite Y which, optionally, has been ion-exchanged with rare earth metals (RE). As examples of such known cracking catalysts, mention may be made of the catalysts according to U.S. patent specification 4,456,693 and British patent specification 1,393,501. The present invention, on the other hand, relates to a catalytic reaction of an entirely different type, i.e. a reduction of nitrogen oxides. It should also be mentioned that vanadium pentoxide is poisonous to cracking catalysts.

It has been found, in connection with the process of the invention, that the catalyst, if no vanadium pentoxide is used, should preferably contain 10-60% by weight of RE ion-exchanged zeolite USY, 1-10% by weight alumina, and 1-20% by weight $SiO_2$, the balance being clay, and even more preferably 40-60% by weight of RE ion-exchanged zeolite USY, 5-10% by weight alumina, and 2-5% by weight $SiO_2$, the balance being clay. An especially preferred embodiment contains 50% by weight of RE ion-exchanged zeolite USY, 10% by weight alumina, 3% by weight $SiO_2$ and 37% by weight attapulgite.

If the catalyst comprises an ultrastable zeolite Y in combination with vanadium pentoxide, which catalyst is comprised in the invention, it has been found that the catalyst should preferably contain 5-30% by weight vanadium pentoxide, the balance of the catalyst preferably being a mixture of 10-60% by weight zeolite USY, 1-10% by weight alumina, and 1-20% by weight $SiO_2$, the balance being clay, and even more preferably 10-30% by weight zeolite USY, 5-15% by weight alumina, and 2-5% by weight $SiO_2$, the balance being clay. An especially preferred embodiment contains 20% by weight vanadium pentoxide, the balance being a mixture of 27% by weight zeolite USY, 10% by weight alumina, 3% by weight $SiO_2$ and 60% by weight clay.

If it is desired to further increase the nitrogen oxide conversion ability of a catalyst containing vanadium pentoxide, zeolite USY may also be ion-exchanged with RE ions, which catalyst is comprised in the invention.

The invention thus comprises a method for purifying flue gases from nitrogen oxides, in which method the flue gases are conducted through or contacted with a catalyst having the above-mentioned composition, the temperature being 275-400°C. The gas hourly space velocity of the flue gases may be higher than 3000 h⁻¹, for example 5000 h⁻¹, or higher. One advantage of the catalyst and the method according to the present invention is that substantially complete purification can be achieved also at very high spae velocities. Thus, the flue gas flow may have a gas hourly space velocity as high as at least 7500 h⁻¹, especially at least 10000 h⁻¹, or higher. The method can be carried out by conducting the flue gases through a stationary bed of pellets of the catalyst, through a honeycomb structure coated with said catalyst, or through a fluidised bed of said catalyst. It is especially advantageous if the flue gas flow is mixed with ammonia in per se known manner.

In carrying the invention into effect, use may be made, in addition to the above-mentioned support, of a macro-support in the form of, for example, a honeycomb structure, spheres, grains or plates to which macro-support the catalyst according to the invention has been applied, for example in the form of a surface layer. If a macro-support is used, the percentages indicated should be calculated on the active part of the catalyst, i.e. the catalyst mass exclusive of the macro-support.

One method of preparing a catalyst for the purpose of the invention is to peptise the alumina with, for example, formic acid, whereupon water glass, zeolite and clay are admixed to form an extrudable mass. After extrusion, the extrudate may be air-dried for a suitable period of time. If the zeolite is used in combination with vanadium pentoxide, impregnation with ammonium vanadate is then carried out, followed by calcining at, for example, 550°C for 2 h. If, on the other hand, the zeolite is to be used without vanadium pentoxide, and if it is to have the form of a RE ion-exchanged zeolite USY, calcining is carried out at, for example, 550°C for 2 h after drying. If the zeolite in the catalyst is to be a RE ion-exchanged zeolite USY, the calcined catalyst is ion-exchanged with rare earth metals in per se known manner. Finally, drying is carried out to provide a usable product. However, the RE ion-exchange may be carried out before the zeolite is admixed to the remaining components.

In making the catalyst, it is preferred to combine the zeolite with the support in the manner disclosed in PCT PUblication WO85/03241 which is here included by reference.

Besides attapulgite as clay material and support in the catalyst according to the invention, use may be made of such materials as halloysite, sepiolite or chrysotile, or mixtures thereof. The silica may be supplied as water glass or silica sol. The aluminium oxide is preferably supplied as alumina.

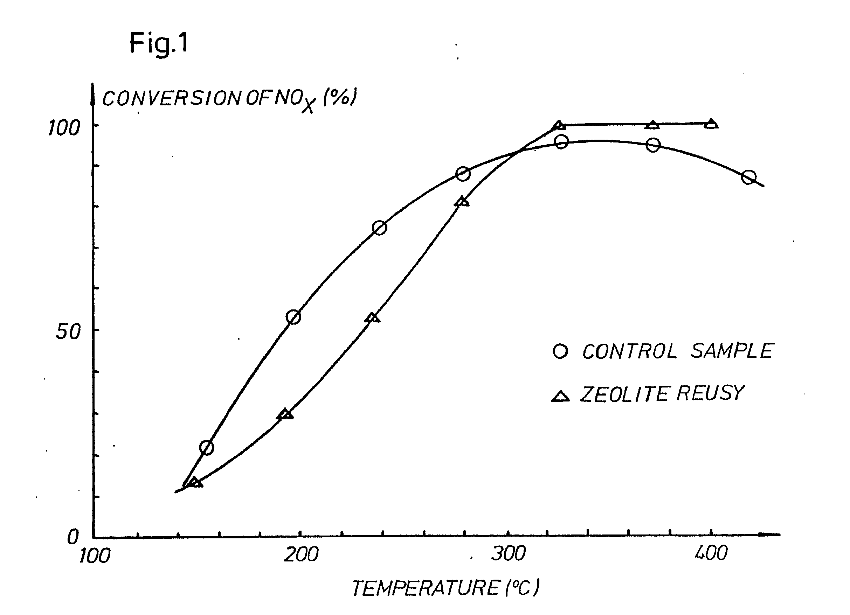

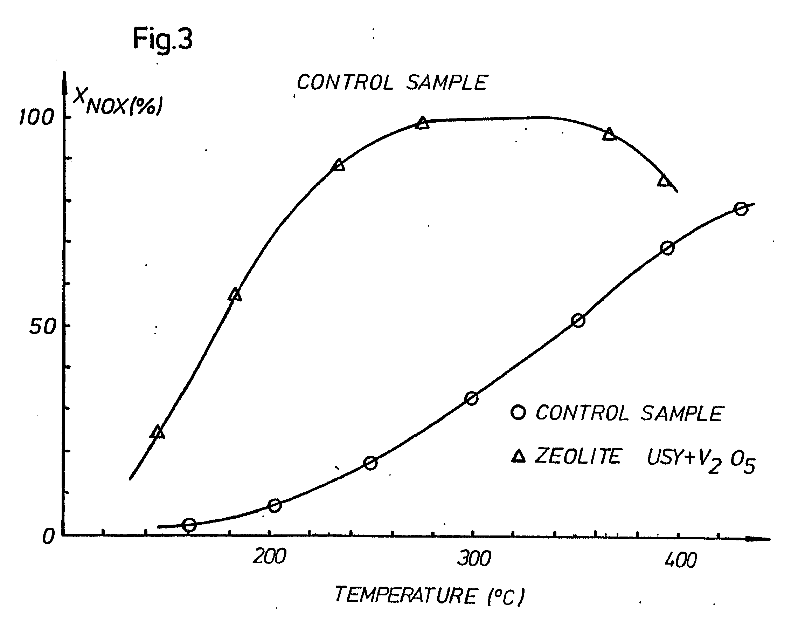

The invention will be described in more detail below, reference being had to the following Examples and to the accompanying drawings in which Figs. 1, 2 and 4 are diagrams showing the reaction of nitrogen oxides as a function of the temperature when utilising different catalysts in the following Examples, and in which Fig. 3 illustrates the pore size distribution of a catalyst according to Example 2.

Regarding the methods of producing the different zeolite types herein mentioned, reference is made to, for example, Donald W. Breck, "Zeolite Molecular Sieves", John Wiley & Sons, Inc., New York, 1974.

EXAMPLE 1

A mixture was formed of 50% zeolite USHY, 10% alumina sol, 3% $SiO_2$ (as water glass) and 37% attapulgite clay. The zeolite Y employed thus was an ultrastable form of zeolite Y in the hydrogen form. The alumina was purchased from Condea under the trade name "Pural® SB" and had a surface area of 250 $m^2/g$. In preparing the catalyst, the alumina was peptised with 9% formic acid, whereupon the water glass, the zeolite and the clay were admixed and kneaded until an extrudable mass had been obtained. After extrusion, the extrudate was air-dried for 16 h, followed by calcining at 550°C for 2 h. Half the catalyst batch thus prepared was then used for control and comparison, while the other half was utilised for preparing a catalyst according to the invention. For this purpose, the other half of the catalyst batch was then subjected to ion-exchange with rare earth metals (RE) by mixing 100 g extrudate with 150 ml water at 90°C, and by adding at pH 4.5-4.8 57 ml RE solution (purchased from Rhône-Poulenc, 330 g $RE_2O_3/l$ solution). After agitation for 1 h at 90°C, washing was effected with water supplied at a temperature of 80°C. Finally, filtration and drying at 110°C were carried out in a heating cabinet. The resulting zeolite had a $RE_2O_3$ content of 9.2%.

The catalysts thus prepared were tested in respect of their ability to remove nitrogen oxides by placing 4.5 ml catalyst (extrudate of diameter 0.71-0.75 mm) in a reactor having an inner diameter of 0.465 cm and a length of 26 cm. Through this catalyst, flue gases were supplied which had been composed to simulate flue gases from an oil or coal fired plant and formed by mixing together oxygen, nitrogen and nitrogen oxides. The oxygen content was 2-6%, and the flue gases contained nitrogen oxides in an amount of approximately 600-700 ppm (parts by volume). Before introduction into the reactor, ammonia in an amount of 600-700 ppm was also added. After steady-state condition had been achieved, i.e. the conversion of the nitrogen oxides in the flue gas flow had become constant (which required varying periods of time, i.e. from 5 min to 2 h from the start of the test), analysis values in the form of mean values were taken during a 5-min test period (inflow and outflow values were measured). The temperature of the inflowing flue gases was varied to enable assessement of the performance of the cataylsts at different temperatures. The gas hourly space velocity for the test series was 7728 ± 442 $Nm^3/m^3.h$ for the control sample, and 8211 ± 481 $Nm^3/m^3.h$ for the catalyst according to the invention. The enclosed Fig. 1 shows the nitrogen reduction as a function of the gas temperature for the two catalysts. In inflowing flue gases had a nitrogen oxide content of 624 ± 5 ppm, an oxygen content of 5.89 ± 0.28%, and an ammonia content of 701 ± 8 ppm in the control sample. The diagram clearly shows that the reaction of the nitrogen oxides never exceeded 95% in the temperature range 300-400°C. In the test series with the catalyst according to the invention, the inflowing flue gases had a nitrogen oxide content of 638 ± 21 ppm, an oxygen content of 5.96 ± 0.12% and an ammonia content of 686 ± 10 ppm. It appears from the diagram that a 100% conversion of the nitrogen oxides is obtained at temperatures in excess of 320°C, in spite of the very high space velocity. This shows that the invention makes it possible to utilise reactors which are smaller than those previously used in other nitrogen oxide removing plants which frequently operate at space velocities of 2000-5000 $h^{-1}$. Table 1 indicates the measured values which were obtained and which form the basis of Fig. 1.

## TABLE 1

| | Temperature °C | NO$_x$ conversion % |
|---|---|---|
| Control sample | 154 | 22 |
| | 197 | 53 |
| | 239 | 74 |
| | 279 | 87 |
| | 326 | 95 |
| | 372 | 94 |
| | 419 | 86 |
| The invention | 148 | 14 |
| | 191 | 29 |
| | 235 | 52 |
| | 278 | 82 |
| | 324 | 100 |
| | 372 | 100 |
| | 400 | 100 |

EXAMPLE 2

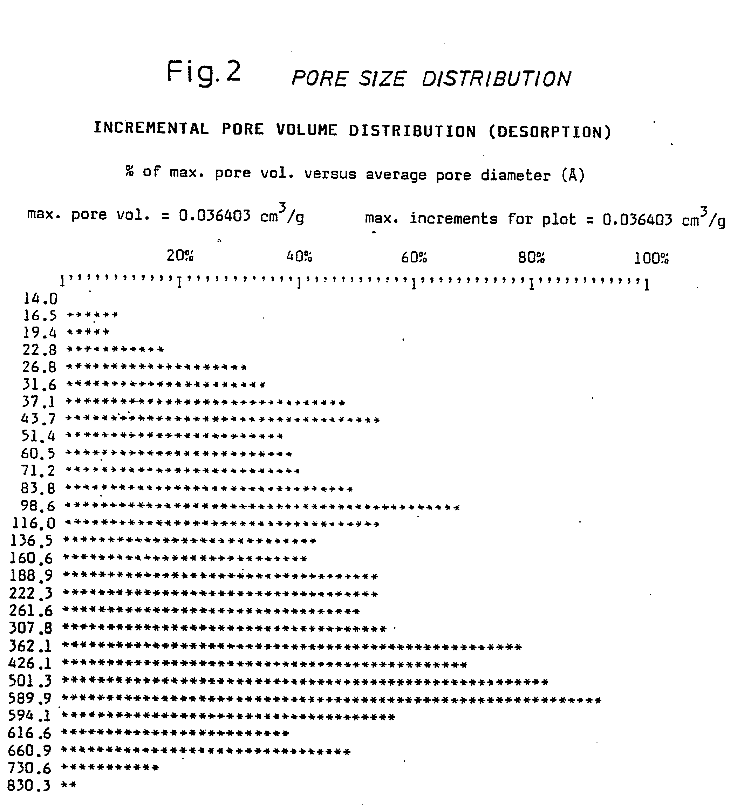

A mixture was formed of 27% zeolite USHY, 10% alumina, 3% SiO$_2$ (as water glass) and 29.8% attapulgite clay and 29.8% halloysite. The zeolite Y employed thus was an ultrastable form of zeolite Y in the hydrogen form. The alumina was the same as in Example 1. In the preparation, the alumina was peptised with 9% formic acid, whereupon the water glass, the zeolite and the clay were admixed and kneaded until an extrudable mass had been obtained. After extrusion, the extrudate was air-dried for 16 h, followed by calcining at 550°C for 2 h. The product had a crushing strength of 1.1 ± 0.41 kg, a pore volume of 0.336 cm$^3$/g, and the pore size distribution shown in Fig. 2. Half the catalyst batch prepared was then used for control and comparison, while the other half was utilised for preparing a catalyst according to the invention. For this purpose the other catalyst half was then subjected to impregnation with a solution of ammonium vanadate, followed by calcining at 550°C for 2 h, such that the ammonium vanadate was converted to vanadium pentoxide.

The catalysts thus prepared were tested in respect of their ability to remove nitrogen oxides. Testing was carried out with the same synthetic flue gas mixture and in the same manner as in Example 1. As in Example 1, the temperature of the inflowing flue gases was varied to enable assessment of the performance of the catalysts at different temperatures. The gas hourly space velocity in the test series was 8695 ± 501 Nm$^3$/m$^3$h for the check sample and 13475 ± 327 Nm$^3$/m$^3$h for the catalyst according to the invention. The enclosed Fig. 3 shows the nitrogen reduction as a function of the gas temperature for the two catalysts. In the control sample, the flue gases included had a nitrogen oxide content of 621 ± 3 ppm, an oxygen content of 2.03 ± 0.08%, and an ammonium content of 731 ± 15 ppm.

In the test series with the vanadium pentoxide impregnated catalyst according to the invention, the inflowing flue gases had a nitrogen oxide content of 651 ± 4 ppm, an oxygen content of 2.21 ± 0.06%, and an ammonium content of 696 ± 3 ppm. It appears from Fig. 3 that the untreated catalyst had but an insignificant ability to convert the nitrogen oxides, whereas substantially complete conversion was obtained in the temperature range 275-350°C at a space velocity as high as 13000 h$^{-1}$ when the catalyst according to the invention was utilised. This shows that the invention makes it possible to use reactors smaller than those previously used in other nitrogen oxide removing plants which frequently operate at space velocities of 2000-5000 h⁻¹. Table 2 indicates the measured values that were achieved and form the basis of Fig. 3.

### TABLE 2

| | Temperature °C | NO$_x$ conversion % |
|---|---|---|
| Control sample | 161 | 3 |
| | 203 | 7 |
| | 250 | 18 |
| | 299 | 33 |
| | 352 | 52 |
| | 395 | 69 |
| | 430 | 78 |
| The invention | 145 | 25 |
| | 182 | 57 |
| | 233 | 88 |
| | 274 | 99 |
| | 365 | 96 |
| | 392 | 84 |

EXAMPLE 3

In this Example, a catalyst according to the invention (zeolite REUSY) was compared with other types of zeolite catalysts. The entire test series was begun with a starting material in the form of zeolite NaY which had been prepared by conventional technique and had a ratio of 4.9:1:1 between $SiO_2$, $Al_2O_3$ and $Na_2O$. The material batch prepared was divided into six part batches, one of which was used as zeolite NaY, while the others were subjected to different treatments for conversion into zeolites HY, USHY, REY, CREY and REUSY. Zeolite HY was prepared from zeolite NaY by ammonium ion-exchange and subsequent heating at 300°C for 1 h. The zeolite USHY was prepared from zeolite NaY by first subjecting the latter to ammonium ion-exchange in conventional manner and then heating it in conventional manner in a water vapour atmosphere at about 700°C for 70 min. The zeolite REUSY was prepared from zeolite USHY by RE ion-exchange in the manner stated in Example 1. The zeolite REY was prepared from zeolite HY by RE ion-exchange in the manner stated in Example 1. The zeolite CREY was prepared from zeolite REY by calcining at 500-650°C for 2 h. The resulting zeolite materials were then mixed with a support such that the finished catalysts comprised 50% by weight of zeolite material, 10% by weight $Al_2O_3$ (supplied as "PURAL® SB" from Condea) and 5% by weight $SiO_2$ (supplied as water glass), the balance being attapulgite clay.

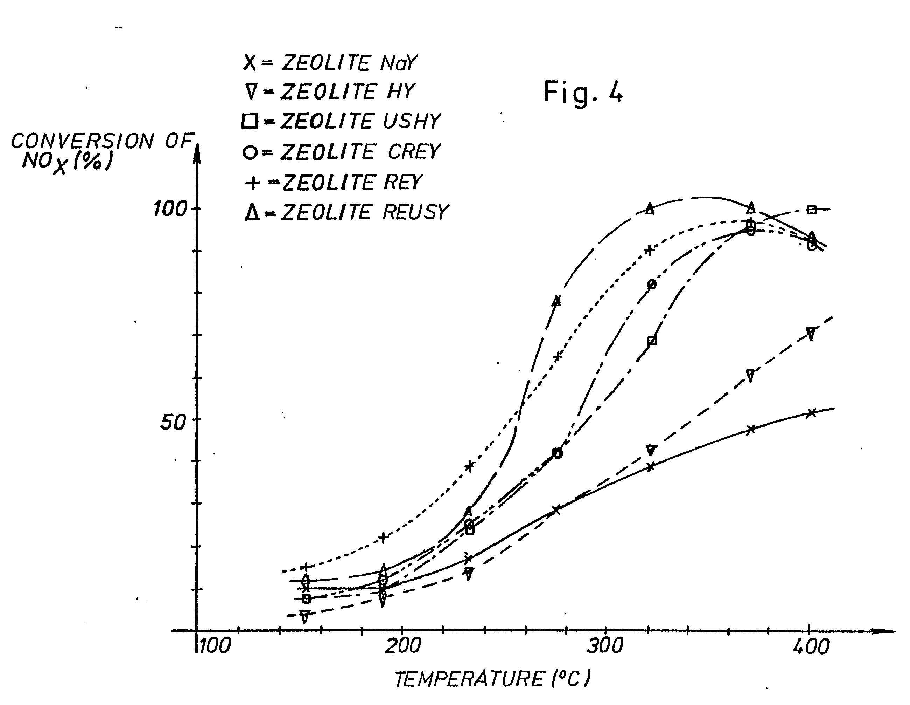

The catalysts thus prepared were tested in the manner stated in Example 1 in respect of their ability to remove nitrogen oxides. The synthetic flue gas flow contained 6% oxygen and 600 ppm NO$_X$, the balance being nitrogen, and was mixed with ammonia in a NH$_3$:NO$_X$ ratio of 1.1:1. The gas hourly space velocity of the flue gas flow in the test series was 8000 h⁻¹. The result of the different catalysts is shown in Fig. 4 and Table 3, and it is clearly apparent that the catalyst according to the invention, i.e. zeolite REUSY, was far superior within the temperature range 300-400°C.

## TABLE 3

| Temp. °C | NO$_x$ conversion (%) | | | | | |
|---|---|---|---|---|---|---|
| | NAY | HY | USHY | CREY | REY | REUSY |
| 152 | 10 | 4 | 8 | 8 | 15 | 12 |
| 190 | 10 | 8 | 9 | 12 | 22 | 14 |
| 232 | 17 | 14 | 24 | 25 | 39 | 28 |
| 275 | 28 | 28 | 42 | 42 | 65 | 78 |
| 321 | 38 | 43 | 69 | 82 | 90 | 100 |
| 370 | 47 | 61 | 96 | 95 | 97 | 100 |
| 400 | 51 | 71 | 100 | 91 | 91 | 93 |

**Claims**

1. A process for purifying flue gases from nitrogen oxides, in which process the flue gases are conducted through or contacted with a catalyst comprising a support and a catalytically active material, characterised in that said catalytically active material comprises an ultrastable zeolite Y ion-exchanged with rare earth metals and/or combined with vanadium pentoxide, and in that the process is performed at a temperature of 275–400°C.

2. A process as claimed in claim 1, characterised in that the catalyst has a vanadium pentoxide content of 5–30% by weight.

3. A process as claimed in claim 1 or 2, characterised in that the catalyst comprises in addition to said vanadium pentoxide, a mixture consisting of 10–30% by weight zeolite USY, 5–15% by weight alumina, and 2–5% by weight SiO$_2$, the balance being clay.

4. A process as claimed in claim 2 or 3, characterised in that the zeolite is RE ionexchanged zeolite USY.

5. A process as claimed in claim 1, characterised in that the catalyst comprises 10–60% of RE ion-exchanged zeolite USY, 1–10% by weight alumina, and 1–20% by weight SiO$_2$, the balance being clay.

6. A process as claimed in claim 5, characterised in that the catalyst comprises 40–60% of RE ion-exchanged zeolite USY, 5–10% by weight alumina, and 2–5% by weight SiO$_2$, the balance being clay.

7. A process as claimed in any one of claims 3–6, characterised in that SiO$_2$ has been added as water glass or silica sol.

8. A process as claimed in any one of claims 1–7, characterised in that the clay is attapulgite, halloysite, sepiolite or chrysotile, or mixtures thereof.

9. A process as claimed in claims 5–8, characterised in that it has been formed of 50% by weight of RE ion-exchanged zeolite USY, 10% alumina, 3% SiO$_2$ as water glass, and 37% attapulgite.

10. A process as claimed in any one of claims 1–3 and 7–8, characterised in that has been formed from 5–30% by weight vanadium pentoxide, the balance being a mixture of 27% zeolite USY, 10% alumina, 3% SiO$_2$ as water glass, and 60% clay, preferably attapulgite in mixture with halloysite.

11. A process as claimed in claim 1, characterised in that the temperture is 300–400°C.

12. A process as claimed in claim 1, characterised in that flue gases are conducted through or contacted with the catalyst at a gas hourly space velocity of at least 7500 h$^{-1}$.

13. A process as claimed in claim 12, characterised in that the gas hourly space velocity is at least 10000 h$^{-1}$.

14. A process as claimed in any one of claims 11–13, characterised in that the flue gases are conducted through or contacted with the catalyst in the presence of ammonia.

15. A catalyst for purifying flue gases from nitrogen oxides, where the flue gases are conducted through or contacted with a catalyst comprising a support and a catalytically active material as claimed in any one of the preceding claims, characterised in that said catalytically active material comprises an ultrastable zeolite Y, possibly ion-exchanged with rare earth metals and combined with vanadium pentoxide.

16. A catalyst as claimed in claim 15, characterised in that the catalyst has a vanadium pentoxide content of 5–30% by weight.

17. A catalyst as claimed in claim 15 or 16, characterised in that the catalyst comprises, in addition to said vanadium pentoxide, a mixture consisting of 10–30% by weight zeolite USY, 5–15% by weight alumina, and 2–5% by weight $SiO_2$, the balance being clay.

18. A catalyst as claimed in claim 16 or 17, characterised in that the zeolite is RE ion-exchanged zeolite USY.

19. A catalyst as claimed in claim 17 or 18, characterised in that $SiO_2$ has been added as water glass or silica sol.

20. A catalyst as claimed in any one of claims 15–19, characterised in that the clay is attapulgite, halloysite, sepiolite or chrysotile, or mixtures thereof.

21. A catalyst as claimed in any one of claims 15–20, characterised in that it has been formed from 5–30% by weight vanadium pentoxide, the balance being a mixture of 27% zeolite USY, 10% alumina, 3% $SiO_2$ as water glass, and 60% clay, preferably attapulgite in mixture with halloysite.

## Patentansprüche

1. Verfahren zur Reinigung von Abgasen von Stickstoffoxiden, bei dem die Abgase durch einen Katalysator hindurchgeleitet oder mit einem Katalysator in Kontakt gebracht werden, der einen Träger und ein katalytisch aktives Material enthält, dadurch gekennzeichnet, daß das katalytisch aktive Material einen mit Metallen der seltenen Erden Ionen-ausgetauschten und/oder mit Vanadin-pentoxid kombinierten ultrastabilen Zeolith Y enthält, und daß das Verfahren bei einer Temperatur von 275 bis 400°C durchgeführt wird.

2. Verfahren gemäß Anspruch 1, dadurch gekennzeichnet, daß der Katalysator einen Vanadin-pentoxidgehalt von 5 bis 30 Gew.-% aufweist.

3. Verfahren gemäß Anspruch 1 oder 2, dadurch gekennzeichnet, daß der Katalysator zusätzlich zu dem Vanadin-pentoxid eine Mischung enthält, die aus 10 bis 30 Gew.-% Zeolith USY, 5 bis 15 Gew.-% Aluminiumoxid und 2 bis 5 Gew.-% $SiO_2$ besteht, wobei der Rest Ton ist.

4. Verfahren gemäß Anspruch 2 oder 3, dadurch gekennzeichnet, daß der Zeolith ein RE-Ionen-ausgetauschter (mit Metallen der seltenen Erden Ionen-ausgetauschter) Zeolith USY ist.

5. Verfahren gemäß Anspruch 1, dadurch gekennzeichnet, daß der Katalysator 10 bis 60 Gew.-% RE-Ionenausgetauschten Zeolith USY, 1 bis 10 Gew.-% Aluminiumoxid und 1-20 Gew.-% $SiO_2$ enthält, wobei der Rest Ton ist.

6. Verfahren gemäß Anspruch 5, dadurch gekennzeichnet, daß der Katalysator 40 bis 60% RE-Ionenausgetauschten Zeolith USY, 5 bis 10 Gew.-% Aluminiumoxid und 2 bis 5 Gew.-% $SiO_2$ enthält, wobei der Rest Ton ist.

7. Verfahren gemäß einem der Ansprüche 3 bis 6, dadurch gekennzeichnet, daß $SiO_2$ in Form von Wasserglas oder Silicasol zugegeben worden ist.

8. Verfahren gemäß einem der Ansprüche 1 bis 7, dadurch gekennzeichnet, daß der Ton Attapulgit, Halloysit, Sepiolith oder Chrysotil oder eine Mischung hiervon ist.

9. Verfahren gemäß den Ansprüchen 5 bis 8, dadurch gekennzeichnet, daß er aus 50 Gew.-% RE-Ionenausgetauschtem Zeolith USY, 10% Aluminiumoxid, 3% $SiO_2$ in Form von Wasserglas und 37% Attapulgit gebildet worden ist.

10. Verfahren gemäß einem der Ansprüche 1 bis 3 und 7 bis 8, dadurch gekennzeichnet, daß er aus 5 bis 30 Gew.-% Vanadin-pentoxid gebildet worden ist, wobei der Rest eine Mischung aus 27% Zeolith USY, 10% Aluminiumoxid, 3% $SiO_2$ in Form von Wasserglas und 60% Ton, vorzugsweise Attapulgit in Mischung mit Halloysit, ist.

11. Verfahren gemäß Anspruch 1, dadurch gekennzeichnet, daß die Temperatur 300 bis 400°C beträgt.

12. Verfahren gemäß Anspruch 1, dadurch gekennzeichnet, daß die Abgase mit einer stündlichen Gas-Raum-Geschwindigkeit von zumindest 7500 $h^{-1}$ durch den Katalysator hindurchgeleitet oder mit dem Katalysator in Kontakt gebracht werden.

13. Verfahren gemäß Anspruch 12, dadurch gekennzeichnet, daß die stündliche Gas-Raum-Geschwindigkeit zumindest 10 000 $h^{-1}$ beträgt.

14. Verfahren gemäß einem der Ansprüche 11 bis 13, dadurch gekennzeichnet, daß die Abgase in Gegenwart von Ammoniak durch den Katalysator hindurchgeleitet oder mit dem Katalysator in Kontakt gebracht werden.

15. Katalysator zur Reinigung von Abgasen von Stickstoffoxiden, bei dem die Abgase durch einen Katalysator hindurchgeleitet oder mit einem Katalysator in Kontakt gebracht werden, der einen Träger und ein katalytisch aktives Material gemäß einem der vorhergehenden Ansprüche enthält, dadurch gekennzeichnet, daß das katalytisch aktive Material einen ultrastabilen Zeolith Y, gegebenenfalls Ionen-ausgetauscht mit Metallen der seltenen Erden und kombiniert mit Vanadin-pentoxid enthält.

16. Katalysator gemäß Anspruch 15, dadurch gekennzeichnet, daß der Katalysator einen Vanadin-pentoxidgehalt von 5 bis 30 Gew.-% aufweist.

17. Katalysator gemäß Anspruch 15 oder 16, dadurch gekennzeichnet, daß der Katalysator zusätzlich zu dem Vanadin-pentoxid eine Mischung enthält, die aus 5 bis 30 Gew.-% Zeolith USY, 5 bis 15 Gew.-% Aluminiumoxid und 2 bis 5 Gew.-% $SiO_2$ besteht, wobei der Rest Ton ist.

18. Katalysator gemäß Anspruch 16 oder 17, dadurch gekennzeichnet, daß der Zeolith ein RE-Ionen-ausgetauschter Zeolith USY ist.

19. Katalysator gemäß Anspruch 17 oder 18, dadurch gekennzeichnet, daß das $SiO_2$ in Form von Wasserglas oder Silicasol zugegeben worden ist.

20. Katalysator gemäß einem der Ansprüche 15 bis 19, dadurch gekennzeichnet, daß der Ton Attapulgit, Halloysit, Sepiolith oder Chrysotil oder eine Mischung hiervon ist.

21. Katalysator gemäß einem der Ansprüche 15 bis 20, dadurch gekennzeichnet, daß er aus 5 bis 30 Gew.-% Vanadinpentoxid gebildet worden ist, wobei der Rest eine Mischung von 27% Zeolith USY, 10% Alluminiumoxid, 3% $SiO_2$ in Form von Wasserglas und 60% Ton, vorzugsweise Attapulgit in Mischung mit Halloysit, ist.

**Revendications**

1. Procédé pour débarrasser les gaz de combustion des oxydes d'azote, dans lequel le gaz de combustion sont conduits à travers, ou mis en contact avec, un catlayseur comprenant un suppret et une substance catalytiquement acitve, caracérisé en ce que la substance catalytiquement active comprend une zéolithe Y ultrastable, ayant subi un échange d'ions avec des métaux des terres rares et/ou combinée avec le pentoxyde de vanadium, et en ce que le procédé est réalisé a une temperature de 275–400°C.

2. Procédé selon la revendication 1, caractérisé en ce que le catalyseur présente une teneur en pentoxyde de vanadium de 5–30% en poids.

3. Procédé selon la revendication 1 ou 2, caractérisé en ce que le catalyseur comprend, en plus dudit pentoxyde de vanadium, un mélange constitué de 10–30% en poids de zéolithe USY, de 5–15% en poids d'alumine et de 2–5% en poids de $SiO_2$, le complement étant de l'argile.

4. Procédé selon la revendication 2 ou 3, caractérisé en ce que la zéolithe est une zéolithe USY ayant subi un échange d'ions avec des métaux des terres rares.

5. Procédé selon la revendication 1, caractérisé en ce que le catalyseur comprend 10–60% de zéolithe USY ayant subi un échange d'ions avec des métaux des terres rares, 1–10% en poids d'alumine et 1–20% en poids de SiO2, le complément étant de l'argile.

6. Procédé selon la revendication 5, caractérisé en ce que le catalyseur comprend 40–60% en poids de zeolithe USY ayant subi un échange d'ions avec des métaux des terres rares, 5–10% en poids d'alumine et 2–5% en poids de SiO2, le complément étant de l'argille.

7. Procédé selon l'une quelconque des revendications 3–6, caractérisé en ce que SiO2 est ajouté sous forme de verre soluble ou de sol de silice.

8. Procédé selon l'une quelconque des revendications 1–7, caractérisé en ce que l'argile est l'attapulgite, l'halloysite, la sépiolite ou la chrysolite, ou leurs mélanges.

9. Procédé selon l'une quelconque des revendications 5–8, caractérisé en ce que le catalyseur est formé de 50% en poids de zéolithe USY ayant subi un échange d'ions avec des métaux des terres rares, de 10% d'alumine et de 3% en poids de $SiO_2$ sous forme de verre soluble, et de 37% d'attapulgite.

10. Procédé selon l'une quelconque des revendications 1–3 et 7–8, caractérisé en ce que le catalyseur est constitué de 5–30% en poids de pentoxyde de vanadium, le complément étant un mélange consitué de 27% de zéolithe USY, de 10% d'alumine, de 3% de $SiO_2$ sous forme de verre soluble et de 60% d'argile, de préférence l'attapulgite en mélange avec l'halloysite.

11. Procédé selon la revendication 1, caractérisé en ce que la temperature est de 300–400°C.

12. Procédé selon la revendication 1, caractérisé en ce que les gaz de combustion sont conduits à travers, ou mis en contact avec, un catalyseur avec une vitesse spatiale horaire des gaz d'au moins 7500 $h^{-1}$.

13. Procédé selon la revendication 12, caractérisé en ce que la vitesse spatiale horaire des gaz est d'au moins 10000 $h^{-1}$.

14. Precédé selon l'une quelconque des revendications 11–13, caractérisé en ce que les gaz de combustion sont conduits à travers, ou mis en contact avec, un catalyseur en presence d'ammoniac.

15. Catalyseur pour débarrasser les gaz de combustion des oxydes d'azote, dans lequel les gaz de combustion sont conduits à travers, ou mis en contact avec, un catalyseur comprenant un support et une substance catalytiquement active, selon l'une quelconque des revendications précédentes, caractérisé en ce que ladite substance catalytiquement active comprend une zéolithe Y ultrastable ayant subi éventuellement un échange d'ions avec des métaux des terres rares et combinée avec le pentoxyde de vanadium.

16. Catalyseur selon la revendication 15, caractérisé en ce que le catalyseur a une teneur en pentoxyde de vanadium de 5–30% en poids.

17. Catalyseur selon l'une des revendications 15 ou 16, caractérisé en ce que le catalyseur comprend, en plus dudit pentoxyde de vanadium, un mélange constitué de 10–30% en poids de zéolithe USY, de 5–15% en poids d'alumine et de 2–5% en poids de $SiO_2$, le complément étant de l'argile.

18. Catalyseur selon l'une des revendications 16 ou 17, caractérisé en ce que la zéolithe est une zéolithe USY ayant subi un échange d'ions avec des métaux des terres rares.

19. Catalyseur selon l'une des revendications 17 ou 18, caractérisé en ce que $SiO_2$ est ajouté sous forme de verre soluble ou de sol de silice.

20. Catalyseur selon l'une quelconque des revendications 15–19, caractérisé en ce que l'argile est l'attapulgite, l'halloysite, la sepiolite ou la chrysolite, ou leurs mélanges.

21. Catalyseur selon l'une quelconque des revendications 15–20, caractérisé en ce qu'il est formé de 5–30% en poids de pentoxyde de vanadium, le complément étnt un mélange constiué de 27% de zéolithe USY, de 10% d'alumine, de 3% de $SiO_2$ sous forme de verre soluble, et de 60% d'argile, de préférence l'attapulgite en mélange avec l'halloysite.

Fig.1

CONVERSION OF NO$_X$ (%)

O  CONTROL SAMPLE

△  ZEOLITE REUSY

TEMPERATURE (°C)

EP 0 214 942 B1

# Fig. 2 *PORE SIZE DISTRIBUTION*

INCREMENTAL PORE VOLUME DISTRIBUTION (DESORPTION)

% of max. pore vol. versus average pore diameter (Å)

max. pore vol. = 0.036403 $cm^3$/g          max. increments for plot = 0.036403 $cm^3$/g

```
              20%           40%           60%           80%          100%
      I'''''''''''I'''''''''''''''I''''''''''''''I''''''''''''I'''''''''''I
 14.0
 16.5 ******
 19.4 *****
 22.8 **********
 26.8 ********************
 31.6 *********************
 37.1 *********************************
 43.7 **************************************
 51.4 *************************
 60.5 *************************
 71.2 **************************
 83.8 ***************************
 98.6 ***********************************************
116.0 ****************************************
136.5 ***************************
160.6 ****************************
188.9 *******************************
222.3 ********************************
261.6 *****************************
307.8 **************************************
362.1 *************************************************
426.1 **********************************************
501.3 ****************************************************
589.9 ********************************************************
594.1 ***************************************
616.6 **************************
660.9 *****************************
730.6 **********
830.3 **
```

Fig.3

$X_{NOX}(\%)$

CONTROL SAMPLE

CONTROL SAMPLE

O CONTROL SAMPLE
Δ ZEOLITE USY+$V_2O_5$

TEMPERATURE (°C)

100

50

0

200

300

400

Fig. 4

Legend:
X = ZEOLITE NaY
▽ = ZEOLITE HY
□ = ZEOLITE USHY
O = ZEOLITE CREY
+ = ZEOLITE REY
Δ = ZEOLITE REUSY

CONVERSION OF NO$_X$ (%) vs TEMPERATURE (°C)

EP 0 214 942 B1